# EUROPÄISCHE PATENTSCHRIFT

(11) **EP 4 416 414 B1**
(45) Veröffentlichungstag und Bekanntmachung des Hinweises auf die Patenterteilung: **01.07.2026**
(21) Anmeldenummer: 22798147.9
(22) Anmeldetag: 06.10.2022
(51) Int. Cl.: F01D 11/16, F01D 17/20, F01D 17/26, F04D 29/08, F04D 29/52, F16J 15/44, F16J 15/453, F01D 11/00, F04D 29/10

(54) **VORRICHTUNG UND VERFAHREN ZUM AUSGLEICHEN VON TOLERANZEN UND/ODER SPALTWEITEN DER VORRICHTUNG UND TRIEBWERK, MONTAGEVERFAHREN FÜR EINE WELLE-NABE-VERBINDUNG**
DEVICE AND METHOD FOR COMPENSATION OF TOLERANCES AND/OR GAP WIDTHS OF THE DEVICE AND ENGINE, ASSEMBLY METHOD FOR A SHAFT/HUB CONNECTION
DISPOSITIF ET PROCÉDÉ DE COMPENSATION DE TOLÉRANCES ET/OU DE LARGEURS D'ESPACE DU DISPOSITIF ET MOTEUR, PROCÉDÉ D'ASSEMBLAGE POUR UNE LIAISON ARBRE/MOYEU

(30) Priorität: 12.10.2021 DE 102021126424
(43) Veröffentlichungstag der Anmeldung: 21.08.2024
(73) Patentinhaber: Universität der Bundeswehr München, 85579 Neubiberg (DE)
(72) Erfinder: HUPFER, Andreas, 85386 Eching (DE); HERTER, Niels, 80336 München (DE)
(74) Vertreter: Hoefer & Partner Patentanwälte mbB
(86) Internationale Anmeldenummer: PCT/EP2022/077808
(87) Internationale Veröffentlichungsnummer: WO 2023/061844

(56) Entgegenhaltungen:
- EP-A1- 2 615 246
- GB-A- 2 514 074
- US-A1- 2015 105 482
- US-A1- 2020 191 162
- US-B2- 10 830 102
- US-B2- 8 688 421
- SANAMI MOHAMMAD ET AL: "Auxetic Materials for Sports Applications", PROCEDIA ENGINEERING, vol. 72, 2014, pages 453 - 458, XP028875482, ISSN: 1877-7058, DOI: 10.1016/J.PROENG.2014.06.079

## Beschreibung

Die Erfindung betrifft eine Vorrichtung aufweisend ein Element zum Ausgleichen von Toleranzen und/oder Spaltweiten der Vorrichtung, ein Montageverfahren für eine Welle-Nabe-Verbindung aufweisend die Vorrichtung sowie ein Anpassungsverfahren zur Anpassung der Toleranz und/oder Spaltweite in einem Triebwerk, welches die Vorrichtung aufweist. Die Erfindung betrifft außerdem ein Triebwerk, welches die Vorrichtung ist.

Herkömmliche Bauelemente, beispielsweise Dichtungsringe oder Gehäuse, sind üblicherweise aus Materialien gebildet, welche eine positive Poissonzahl aufweisen. Diese Materialeigenschaft ist dadurch charakterisiert, dass das Ausüben einer Druckkraft auf das Material dazu führt, dass sich das Material in Richtung der Kraft staucht und senkrecht zur Richtung der Kraft verdickt. Wird eine Zugkraft auf das Material ausgeübt, so streckt sich das Material des Bauelements in Richtung der Kraft und verjüngt sich senkrecht dazu.

US 8 688 421 B2 zeigt eine Entwurfsmethode zur Optimierung einer Scherschicht eines Scherbandes zur Verwendung in einem Reifen. Die Scherschicht weist eine Wabenkonfiguration auf und die Entwurfsmethode optimiert Abmessungen der Waben.

US 2015/105482 A1 zeigt ein Verfahren zur Herstellung eines Schaums mit einer Poissonzahl, die über zumindest einen Bereich des Schaums in einer Gradientenverteilung variiert.

EP 2 615 246 A1 zeigt einen Leitschaufelring mit einer Vielzahl von Leitschaufelsegmenten, an deren benachbarten Innendeckbändern abwechselnd jeweils zumindest ein Dämpfungselement und zumindest jeweils eine Dämpfungselementenaufnahme einer Dämpfungseinrichtung integral ausgebildet ist, wobei die Dämpfungselemente in Umfangsrichtung über gegenüberliegende Seitenkanten der benachbarten Innendeckbänder hinaus geführt sind und mit ihrem jeweils vorspringenden Reibabschnitt kraftschlüssig in der Dämpfungselementenaufnahme eingespannt sind, ein Leitschaufelsegment für einen derartigen Leitschaufelring, ein Verfahren zur Herstellung eines derartigen Leitschaufelsegmentes sowie eine Strömungsmaschine.

US 10830102 B2 zeigt eine Vorrichtung gemäß dem Oberbegriff des Anspruchs 1. SANAMI MOHAMMAD ET AL: "Auxetic Materials for Sports Applications", PROCEDIA ENGINEERING,

Bd. 72 , Seiten 453-458, XP028875482,

ISSN: 1877-7058, DOI: 10.1016/J.PROENG.2014.06.079 zeigt Elemente, die einen auxetischen Abschnitt aufweisen.

Es ist Aufgabe der Erfindung, eine Vorrichtung aufweisend ein Element bereitzustellen, welches insbesondere unter Zugkräften und/oder Druckkräften Toleranzen der Vorrichtung, insbesondere eines Triebwerks, ausgleichen kann.

Die Lösung dieser Aufgabe erfolgt durch die Merkmale des unabhängigen Anspruchs. Die Unteransprüche haben bevorzugte Weiterbildungen der Erfindung zum Inhalt.

Die erfindungsgemäße Vorrichtung aufweisend ein Element zum Ausgleichen von Toleranzen einer Vorrichtung weist einen Hauptkörper auf, welcher zumindest einen ringförmigen Querschnittsabschnitt aufweist. Dabei weist der Querschnittsabschnitt in seiner Umfangsrichtung zumindest einen auxetischen Abschnitt auf, welcher auxetisches Verhalten in Radialrichtung des Hauptkörpers zeigt. Dabei bedeutet "auxetisches Verhalten", dass der Querschnittsabschnitt mit Bezug auf die Radialrichtung des Hauptkörpers eine negative Poissonzahl aufweist. Das bedeutet, dass, wenn der Querschnittsabschnitt eine Druckkraft senkrecht zur Radialrichtung erfährt, sich der Querschnittsabschnitt in Radialrichtung staucht. Somit kann die erfindungsgemäße Vorrichtung durch diese Stauchung Toleranzen der Vorrichtung ausgleichen, wenn das Element und/oder die Vorrichtung eine Druckkraft oder Zugkraft senkrecht zur Radialrichtung des Elements erfährt oder erzeugt.

Hierbei und im Folgenden ist "ringförmig" wie folgt zu verstehen. Eine ringförmige Form ist grundsätzlich nicht auf eine Kreisringform (beispielsweise O-Ring) beschränkt. Vielmehr kann der Querschnittsabschnitt des Hauptkörpers eine beliebige polygonale Ringform aufweisen, wobei ein Außenumfang dessen in Querschnittsansicht ein Polygon bildet (beispielsweise ein Dreieck, Viereck, oder beliebiges Vieleck). Dabei kann beispielsweise ein in Radialrichtung äußerer Umfang der Ringform rund und/oder polygonal sein. Ein Beispiel hierfür ist ein eckiger Ring (wie etwa eine Sechskantmutter oder Vierkantmutter). Ein Innenumfang dessen kann ebenfalls rund oder auch polygonal sein. Eine Kombination von runden und/oder polygonalen Abschnitten von einem oder beiden Innen- und Außenumfängen ist ebenfalls möglich. Die vorgenannte Ringform muss dabei auch nicht zwangsläufig einen geschlossenen Ring bilden, sondern kann vielmehr einen Halbring oder beispielsweise einen geschlitzten Ring bilden. Beispiele für solche Formen können eine Ringscheibe aus einem Hohlzylinder oder beispielsweise eine eckige Scheibe aus einem Hohlquader sein. Des Weiteren muss sich der auxetische Abschnitt nicht über einen gesamten Umfang des Querschnittsabschnitts erstrecken. Als Beispiel dafür kann ein Viertel einer Scheibe eines Hohlzylinders auxetisch ausgebildet sein, wobei der Hauptkörper dem Hohlzylinder entspricht, die Scheibe dem Querschnittsabschnitt des Hohlzylinders entspricht und das Viertel der Scheibe dem auxetischen Abschnitt entspricht.

Insbesondere vorteilhaft ist es, wenn der zumindest eine auxetische Abschnitt, insbesondere alle auxetischen Abschnitte, des Querschnittsabschnitts auxetisches Verhalten nur in der Radialrichtung des Hauptkörpers zeigt.

Insbesondere vorteilhaft ist es, wenn der zumindest eine auxetische Abschnitt, insbesondere alle auxetischen Abschnitte, des Querschnittsabschnitts kein auxetisches Verhalten in einer Richtung senkrecht zur Radialrichtung zeigt. Insbesondere zeigt der auxetische Abschnitt kein auxetisches Verhalten in oder parallel zur Längserstreckungsrichtung des Hauptkörpers. Vorteilhafterweise weist der zumindest eine auxetische Abschnitt, insbesondere alle auxetischen Abschnitte, des Querschnittsabschnitts eine nicht unwesentliche Ausdehnung über eine Dicke des Querschnittsabschnitts auf. Mit anderen Worten ist/sind der oder die auxetischen Abschnitte in einem wesentlichen Bereich der Dicke, senkrecht zur Längserstreckungsrichtung und parallel zur Radialrichtung, gebildet. Besonders vorteilhaft ist es, wenn die Ausdehnung des oder der auxetischen Abschnitts/Abschnitte in Dickenrichtung jeweils 1/4, bevorzugt 1/3, bevorzugt 1/2, bevorzugt 2/3, und/oder bevorzugt 3/4 der Dicke des Querschnittsabschnitts beträgt. Die Dicke des Querschnittsabschnitts ist beispielsweise ein Abstand in Radialrichtung zwischen einem Innenumfang und einem Außenumfang des Querschnittsabschnitts.

Besonders bevorzugt ist/sind der oder die auxetischen Abschnitte in der gesamten Dickenrichtung des Querschnittsabschnitts gebildet.

Bevorzugt weist der zumindest eine auxetische Abschnitt des Querschnittsabschnitts in Radialrichtung eine Mehrzahl von miteinander verbundenen auxetischen Zellen auf. Dabei können die auxetischen Zellen aneinander angrenzen. Dadurch kann die auxetische Wirkung in Radialrichtung des Hauptkörpers verstärkt werden.

Vorteilhafterweise weist der zumindest eine auxetische Abschnitt, insbesondere jeweils zumindest eine auxetische Zelle des auxetischen Abschnitts, in einem Schnitt entlang einer Längsachse des Hauptkörpers zwei Längsstege und zwei Querstege auf. Die Längsstege erstrecken sich dabei in einer Längserstreckungsrichtung parallel zur Längsachse des Hauptkörpers. Die Querstege erstrecken sich dabei zwischen den Längsstegen. Des Weiteren weisen die Querstege jeweils zumindest eine Knickstelle auf. Durch diese Anordnung kann eine besonders stabile und elastische bzw. flexible auxetische Form des auxetischen Abschnitts bzw. der auxetischen Zelle, gebildet sein.

Weiter vorteilhaft ist es, wenn der zumindest eine auxetische Abschnitt, insbesondere jeweils zumindest eine auxetische Zelle des auxetischen Abschnitts, zumindest einen Kraftsteg aufweist. Dabei ist ein Ende des Kraftstegs mit einer Knickstelle verbunden. Der Kraftsteg erstreckt sich ausgehend von der Knickstelle in Längserstreckungsrichtung des Hauptkörpers. Dadurch wird eine auxetische Form erzielt, bei welcher eine Druckkraft und/oder Zugkraft senkrecht zur Radialrichtung des Hauptkörpers oder in Längserstreckungsrichtung des Hauptkörpers über den zumindest einen Kraftsteg auf die Knickstelle des auxetischen Abschnitts bzw. der zumindest einen auxetischen Zelle des auxetischen Abschnitts übertragen wird. Dadurch kann eine besonders elastische und stabile auxetische Form für den auxetischen Abschnitt gebildet sein.

Bevorzugt weist der zumindest eine auxetische Abschnitt, insbesondere jeweils zumindest eine auxetische Zelle des auxetischen Abschnitts, eine doppelte Pfeilspitzenform auf. Alternativ oder zusätzlich dazu kann der auxetische Abschnitt, insbesondere jeweils zumindest eine auxetische Zelle des auxetischen Abschnitts, eine Chiralform aufweisen. Dabei können die doppelte Pfeilspitzenform, die Chiralform und die vorgehend erläuterte auxetische Form mit zwei Längsstegen und zwei Querstegen miteinander kombiniert werden, so dass verschiedene auxetische Abschnitte eines Querschnittsabschnitts, oder verschiedene Querschnittsabschnitte des Hauptkörpers, jeweils verschiedene auxetische Formen der vorgenannten Varianten aufweisen können. Beispielsweise kann dabei ein Querschnittsabschnitt des Hauptkörpers die vorgehend erläuterte auxetische Form mit den zwei Längsstegen und zwei Querstegen aufweisen, ein weiterer Querschnittsabschnitt des Hauptkörpers die doppelte Pfeilspitzenform und ein weiterer Querschnittsabschnitt des Hauptkörpers die Chiralform aufweisen. Dadurch können beispielsweise verschiedene Bereiche des Hauptkörpers verschiedene auxetische Abschnitte aufweisen, wobei dadurch beispielsweise verschiedene Querschnittsabschnitte des Hauptkörpers verschiedene Elastizitäten und mechanische Stabilitäten aufweisen können.

Besonders bevorzugt ist es, wenn das Element als Dichtung, insbesondere als eine berührungslose Dichtung, ausgebildet ist. Dabei ist der Querschnitt, insbesondere der Querschnittsabschnitt, des Hauptkörpers, vollständig kreisringförmig. Dabei kann sich der auxetische Abschnitt des Hauptkörpers über die gesamte Längserstreckungsrichtung, insbesondere zusätzlich über eine gesamte Umfangsrichtung des Hauptkörpers erstrecken. Mit anderen Worten kann dabei der gesamte Hauptkörper des als Dichtung ausgebildeten Elements auxetisches Verhalten in Radialrichtung zeigen. Dadurch kann eine Dichtung gebildet und eingesetzt werden, welche unter Zugkräften und/oder Druckkräften entlang der Längserstreckungsrichtung (senkrecht zur Radialrichtung der Dichtung) auxetisches Verhalten zeigt, so dass beispielsweise eine Dicke der Dichtung unter axialen Druckkräften in Radialrichtung schrumpft. Bevorzugt wird dabei ein Innenradius der Dichtung aufgeweitet bzw. ein Innenumfang der Dichtung vergrößert.

Besonders bevorzugt ist es, wenn das Element als ein Gehäuse der Vorrichtung ausgebildet ist. Dadurch können Toleranzen zwischen dem Gehäuse und in dem Gehäuse aufgenommene Elemente selektiv ausgeglichen werden.

Vorteilhafterweise kann das Element als eine Welle und/oder als eine Nabe einer Welle-Nabe-Verbindung ausgebildet sein. Dabei kann beispielsweise bei der Zusammenstellung der Welle-Nabe-Verbindung die Welle und/oder die Nabe mit einer Druckkraft oder einer Zugkraft beaufschlagt werden, während beispielsweise die Welle in die Nabe eingeführt wird. Dadurch kann eine besonders einfach wieder lösbare kraft- und/oder formschlüssige Welle-Nabe-Verbindung hergestellt werden.

Die Erfindung betrifft insbesondere eine Welle-Nabe-Verbindung, welche das Element oder mehrere der Elemente gemäß den vorstehenden bevorzugten Weiterbildungen aufweist.

Die Erfindung betrifft außerdem ein Triebwerk, welches zumindest ein Element gemäß einem der vorstehenden bevorzugten Weiterbildungen aufweist.

Dabei kann das zumindest eine Element insbesondere als Dichtung, Gehäuse, Welle oder als eine Nabe des Triebwerks ausgebildet sein.

Besonders vorteilhaft ist es, wenn eine Fanstufe und/oder ein Verdichter und/oder eine Turbine des Triebwerks das zumindest eine Element aufweist. Dabei kann das zumindest eine Element beispielsweise als eine Dichtung oder als ein Gehäuse der Fanstufe und/oder des Verdichters und/oder der Turbine ausgebildet sein. Ist das Element als Gehäuse der Fanstufe und/oder des Verdichters und/oder der Turbine ausgebildet, so kann eine Spaltgröße zwischen Schaufeln der Fanstufe und/oder Schaufeln des Verdichters und/oder Schaufeln der Turbine und dem Gehäuse dieser unter Zug- oder Druckbeaufschlagung entlang einer Längserstreckungsrichtung der Fanstufe und/oder des Verdichters und/oder der Turbine verringert oder erhöht werden. Mit anderen Worten wird ein Abstand zwischen den Schaufelspitzen und dem Gehäuse verringert, wenn das Gehäuse eine Zugkraft in Längserstreckungsrichtung (senkrecht zur Erstreckungsrichtung der Schaufeln) erfährt. Dadurch kann ein höherer Wirkungsgrad sowie ein größerer aerodynamischer Betriebsbereich des Triebwerks erreicht werden.

Die vorgenannte Toleranz kann insbesondere ein Spaltmaß zwischen den Schaufeln und dem Gehäuse sein.

Die Erfindung betrifft außerdem ein Montageverfahren für eine Welle-Nabe-Verbindung. Dabei weist die Welle-Nabe-Verbindung eine Welle und eine Nabe auf, wobei die Welle und/oder die Nabe als das vorstehend erläuterte Element ausgebildet ist/sind. Das Montageverfahren weist die folgenden Schritte auf: Einen ersten Schritt, in welchem die als Element ausgebildete Welle und/oder die als Element ausgebildete Nabe entlang einer Längserstreckungsrichtung des Hauptkörpers mit Druck beaufschlagt wird. Einen zweiten Schritt, in welchem die Welle in die Nabe eingeführt wird. Einen dritten Schritt, in welchem die Druckbeaufschlagung der Welle und/oder der Nabe angehalten wird. Dadurch kann ein besonders schnelles und einfaches Montageverfahren für die Welle-Nabe-Verbindung bereitgestellt werden.

Vorteilhafterweise werden dabei der erste und der zweite Schritt gleichzeitig durchgeführt. Insbesondere wird dabei der zweite Schritt während des ersten Schritts und vor dem dritten Schritt durchgeführt. Dabei wird der dritte Schritt bevorzugt nach dem zweiten Schritt durchgeführt.

Vorteilhafterweise weist die Welle eine Nut und/oder eine Aussparung auf. Dabei ist ein Außenumfang der Welle außerhalb der Nut und/oder außerhalb der Aussparung derart ausgebildet, dass die als Element, insbesondere als zumindest abschnittweise in Radialrichtung auxetisch, ausgebildete Nabe ohne Druckbeaufschlagung nur in die Nut und/oder die Aussparung passt, nicht jedoch auf den Außenumfang der Welle außerhalb der Nut und/oder außerhalb der Aussparung.

Die Nut und/oder die Aussparung der Welle kann insbesondere ringförmig sein und sich insbesondere über die gesamte Umfangsrichtung der Welle erstrecken, oder lediglich über einen in Umfangsrichtung erstreckenden Abschnitt der Welle erstrecken.

Die Nut und/oder die Aussparung der Welle kann insbesondere spiralförmig sein. Mit anderen Worten kann sich die Nut und/oder die Aussparung der Welle in Längserstreckungsrichtung und Umfangsrichtung der Welle erstrecken, ähnlich einem Gewinde.

Vorteilhafterweise kann die Welle und/oder die Nabe eine oder mehrere Dichtlippen oder Vorsprünge aufweisen, welche in Aussparung(en) der Nabe und/oder der Welle eingreifen, wobei diese in die Aussparung des entsprechenden Elements ohne Druckbeaufschlagung, insbesondere berührungslos, ineinandergreifen.

Vorteilhafterweise ist dabei die als Element ausgebildete Nabe in einer Druckbeaufschlagungsvorrichtung angeordnet. Ein Beispiel für die Druckbeaufschlagungsvorrichtung ist, wie nachstehend erläutert, eine Klemme. Ein weiteres Beispiel für die Druckbeaufschlagungsvorrichtung kann eine Anordnung von flexiblen Druckkammern, insbesondere Blasebälgen, zur pneumatischen Druckbeaufschlagung sein. Hierbei kann beispielsweise ein Innenumfang oder ein Außenumfang der Nabe variiert werden, insbesondere auch während eines Betriebes der Welle-Nabe-Verbindung. Beispielsweise kann dadurch die Welle-Nabe-Verbindung als eine Art Kupplung, also mit Kupplungsschlupf zwischen der Welle und der Nabe, verwendet werden.

Die Erfindung betrifft außerdem ein Anpassungsverfahren zur Anpassung einer Toleranz und/oder einer Spaltweite in einem Triebwerk gemäß den vorstehend erläuterten bevorzugten Ausführungen. Dabei ist das vorstehend erläuterte Element als ein Gehäuse der Fanstufe und/oder des Verdichters und/oder der Turbine ausgebildet. Das Toleranz- und/oder Spaltweiten-Anpassungsverfahren weist den folgenden Schritt auf: Beaufschlagen des Gehäuses mit einem Druck, sodass die Toleranz zwischen einer Schaufel der Fanstufe und/oder einer Schaufel des Verdichters und/oder einer Schaufel der Turbine und dem Gehäuse zunimmt oder abnimmt. Dadurch kann, insbesondere zeitlich variabel und flexibel, die Toleranz beziehungsweise ein Spaltmaß zwischen den Schaufeln und dem entsprechenden Gehäuse verändert werden, insbesondere an eine bestimmte Flugsituation (beispielsweise Kurvenflug eines das Triebwerk aufweisenden Flugzeugs) angepasst werden.

Vorteilhafterweise wird dabei das Gehäuse mit einem pneumatischen Druck beaufschlagt. Dabei wird bevorzugt ein in der Fanstufe und/oder in dem Verdichter und/oder in der Turbine herrschende Druck auf das Gehäuse umgeleitet. Alternativ oder zusätzlich dazu kann ein externer Kompressor zur Erzeugung des pneumatischen Drucks eingesetzt werden. Hierfür weist das Gehäuse vorteilhafterweise Hohlräume auf. Alternativ oder zusätzlich dazu weist das Gehäuse vorteilhafterweise Blasebälge auf.

Dabei kann der vorgenannte Druck insbesondere ein Druck einer Luftmasse sein, dessen Druck durch die Fanstufe und/oder durch den Verdichter und/oder durch die Turbine verändert wird.

Vorteilhafterweise kann der Druck mittels einer oder mehrere Leitungen auf das entsprechende Gehäuse umgeleitet werden. Hierbei können beispielsweise bereits vorhandene Anzapf-Anschlüsse (auch "Anzapfstellen" genannt) des Triebwerks verwendet werden beziehungsweise mit einer Leitung verbunden sein, welche den Druck auf das entsprechende Gehäuse umleitet. Solche Anzapf-Anschlüsse des Triebwerks sind beispielsweise ein Anzapf-Anschluss für Luft für eine Klimaanlage des das Triebwerk aufweisenden Flugzeugs.

Vorteilhafterweise kann das entsprechende Gehäuse in Längsrichtung zumindest einen, bevorzugt zumindest zwei, doppelwandige Abschnitte aufweisen. Dabei kann der als Element, also der als in Radialrichtung auxetisch, ausgebildete Abschnitt (in Längsrichtung des Gehäuses) des Gehäuses zwischen den doppelwandigen Abschnitten oder angrenzend an dem doppelwandigen Abschnitt angeordnet sein. Wird nun der zumindest eine doppelwandige Abschnitt des entsprechenden Gehäuses mit Druckluft, insbesondere mit der vorstehend beschriebenen angezapften Druckluft, gefüllt, so beaufschlagt dieser den zumindest einen auxetischen Abschnitt des Gehäuses pneumatisch mit Druck. Dadurch wird eine Toleranz oder ein Spaltmaß des auxetischen Abschnitts des Gehäuses verändert.

Vorteilhafterweise wird das entsprechende Gehäuse mechanisch mit Druck beaufschlagt. Dabei wird das entsprechende Gehäuse bevorzugt nicht pneumatisch mit Druck beaufschlagt.

Vorteilhafterweise ist dabei das Gehäuse in einer Klemme angeordnet, wobei die Klemme das Gehäuse mit Druck beaufschlagt.

Vorzugsweise kann dabei die Klemme zumindest eine, bevorzugt zwei, Schraubplatten aufweisen, welche im Wesentlichen senkrecht zur Längserstreckungsrichtung des Gehäuses an einem oder beiden Enden des Gehäuses in Längserstreckungsrichtung angeordnet sind. Des Weiteren weist die Klemme bevorzugt zumindest eine Schraube auf, welche in die Schraubplatte(n) greift. Ein Anziehen der Schraube bewirkt, dass ein Abstand zwischen den Schraubplatten oder ein Abstand zwischen dem Gehäuse und der Schraubplatte abnimmt, wodurch das Gehäuse mit mechanischem Druck beaufschlagt wird.

In den vorstehenden Fällen, in welchen lediglich ein doppelwandiger Abschnitt und/oder lediglich eine Schraubplatte beschrieben wurden, kann ein Luftdruck von außen auf das Gehäuse (beispielsweise Luftdruck bei Flug eines das Triebwerk aufweisenden Flugzeuges) oder ein anliegendes Bauteil des Triebwerks eine Gegenkraft zum lediglich einen doppelwandigen Abschnitt unter pneumatischer Druckbeaufschlagung und/oder zur lediglich einen Schraubplatte unter mechanischer Druckbeaufschlagung liefern.

Vorteilhafterweise weist das Triebwerk eine Steuereinheit auf. Die Steuereinheit ist dazu ausgebildet, die Druckbeaufschlagung auf das Element des Triebwerkes zu steuern. Bevorzugt ist die Steuereinheit eingerichtet, den pneumatischen Druck zu steuern und/oder zu regeln. Hierbei kann die Steuereinheit beispielsweise mit einem Ventil in der vorstehend erläuterten Leitung verbunden sein und das Ventil steuern.

Die Steuereinheit kann außerdem vorteilhafterweise mit einem Drucksensor verbunden sein, welcher einen Druck erfasst, der an dem Element anliegt.

Die Steuereinheit kann außerdem vorteilhafterweise mit der vorstehend erläuterten Schraube der Klemme verbunden sein, um die mechanische Druckbeaufschlagung zu steuern und/oder zu regeln. Dabei kann die Schraube vorzugsweise mittels eines Aktuators gedreht werden, wobei der Aktuator bevorzugt mit der Steuereinheit gesteuert wird.

Vorteilhafterweise ist der Aktuator ein hydraulisch oder pneumatisch betriebenes Antriebselement.

Die Steuereinheit kann insbesondere mit einer Steuereinheit des das Triebwerk aufweisenden Flugzeugs verbunden sein und/oder in Kommunikation stehen.

In den vorstehenden Erläuterungen, insbesondere in den Verfahren, wird bevorzugt das Element in Längsrichtung beidseitig mit Druck beaufschlagt, sodass das Element in Längsrichtung komprimiert wird.

In den vorstehenden Erläuterungen wird erfindungsgemäß das Element, die Welle und/oder die Nabe und/oder das entsprechende Gehäuse des Triebwerks, gezielt und aktiv mit Druck beaufschlagt. Mit anderen Worten wird dabei ein von außen herrschender (beispielsweise bei einer Bewegung des Elementes durch Luft) passiver Druck nicht als die vorstehend erläuterte Druckbeaufschlagung verstanden.

In den vorstehenden Erläuterungen kann das Element aus Kunststoff, insbesondere aus faserverstärktem Kunststoff, und/oder Metall ausgebildet sein.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1a,b,c: schematische perspektivische Ansichten von beispielhaften Elementen und Querschnittsabschnitten von Elementen gemäß einer ersten Ausführungsform der vorliegenden Erfindung;
- Fig. 2: eine Querschnittsansicht des Querschnittsabschnitts eines Hauptkörpers des Elements gemäß der ersten Ausführungsform der vorliegenden Erfindung;
- Fig. 3: eine Querschnittsansicht eines Querschnittsabschnitts des Hauptkörpers des Elements gemäß der ersten Ausführungsform der vorliegenden Erfindung;
- Fig. 4: eine Querschnittsansicht eines Querschnittsabschnitts des Hauptkörpers des Elements gemäß der ersten Ausführungsform der vorliegenden Erfindung;
- Fig. 5a,b,c: Skizzen eines Triebwerkes mit einem Element gemäß der ersten Ausführungsform der vorliegenden Erfindung;
- Fig. 6a,b: Skizzen einer Welle-Nabe-Verbindung mit einem Element gemäß der ersten Ausführungsform der vorliegenden Erfindung;
- Fig. 6c: ein Blockschaltdiagramm eines Montageverfahrens für eine Welle-Nabe-Verbindung mit einem Element gemäß der ersten Ausführungsform der vorliegenden Erfindung;
- Fig. 7: eine schematische Skizze eines beispielhaften auxetischen Abschnitts eines Elements gemäß einer zweiten Ausführungsform der vorliegenden Erfindung; und
- Fig. 8: eine schematische Skizze eines beispielhaften auxetischen Abschnitts eines Elements gemäß einer dritten Ausführungsform der vorliegenden Erfindung.

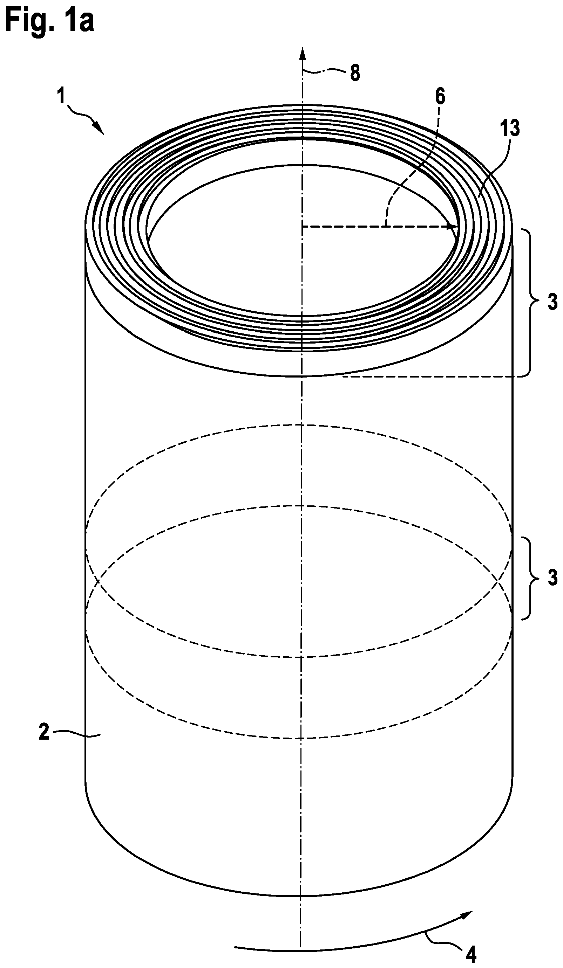

Fig. 1a zeigt eine schematische und perspektivische Ansicht eines beispielhaften Elementes 1 gemäß einer ersten Ausführungsform der vorliegenden Erfindung.

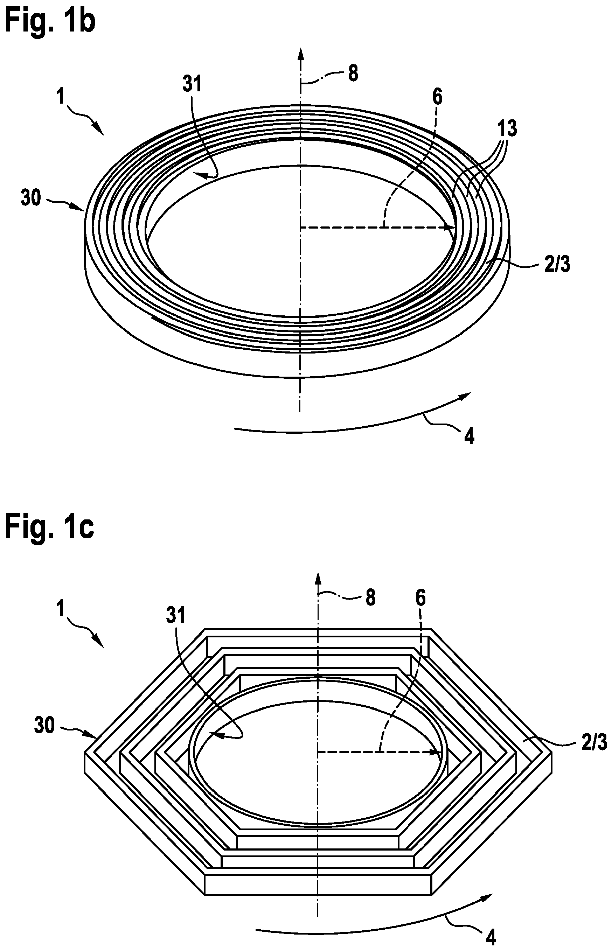

Wie nachfolgend erläutert wird, ist das Element 1 auxetisch ausgebildet, um Toleranzen in einer Vorrichtung (beispielsweise eines Triebwerks oder eines Verbrennungsmotors) auszugleichen. Zunächst wird ein grundsätzlicher Aufbau des Elementes 1 anhand der Fig. 1a,b,c bis Fig. 4 erläutert.

Wie der Fig. 1a zu entnehmen ist, ist das Element 1 hier beispielhaft als Hohlzylinder ausgebildet. Dabei bildet der gesamte Hohlzylinder einen Hauptkörper 2 des Elementes 1.

Dieser Hauptkörper 2 weist eine Vielzahl von Querschnittsabschnitten 3 entlang einer Längsachse 8 des Hauptkörpers 2 auf, welche auxetisches Verhalten in einer Radialrichtung 6 aufzeigen. Ein solches Element 1 kann beispielsweise als Gehäuse eingesetzt werden.

Die Fig. 1b, 1c zeigen jeweils schematische perspektivische Ansichten von beispielhaften Elementen 1 gemäß einer ersten Ausführungsform der vorliegenden Erfindung. Genauer zeigen die Fig. 1b und 1c jeweils einen Querschnittsabschnitt 3 des in Fig. 1a dargestellten Elementes 1 beziehungsweise des Hauptkörpers 2 des Elementes 1.

In Fig. 1a, b ist zu erkennen, dass der besagte Querschnittsabschnitt 3 über den gesamten Umfang, also entlang der gesamten Umfangsrichtung 4, des Hauptkörpers 2 gebildet ist. Der in Fig. 1b dargestellte Querschnittsabschnitt 3 ist ein Kreisring als Scheibe aus dem Hohlzylinder in Fig. 1a. Alternativ kann jedoch auch das gesamte Element 1 wie in Fig. 1b dargestellt aufgebaut sein. Mit anderen Worten kann der gesamte Hauptkörper 2 auxetisch ausgebildet sein. Dabei weist der Hauptkörper 2 genau einen Querschnittsabschnitt 3 entlang der Längsachse 8 auf.

Des Weiteren ist anzumerken, dass auch nur ein Teil des Elementes 1 in Umfangsrichtung 4 auxetisch ausgebildet sein kann. Als Beispiel hierfür kann nur eine Hälfte oder nur ein Viertel, in Umfangsrichtung 4, des in Fig. 1b dargestellten Elementes 1 auxetisch ausgebildet sein.

Die Fig. 1c zeigt außerdem eine alternative Querschnittsform des Elementes 1. Hierbei kann das gesamte Element 1, also der gesamte Hauptkörper 2 dessen, oder nur ein Querschnittsabschnitt 3 dessen eine wie in Fig. 1c dargestellte eckige Ringform aufweisen. Dabei ist ein Außenumfang 30 des Querschnittsabschnitts 3 als Polygon ausgebildet, hier zum Beispiel als Sechseck. Ein Innenumfang 31 der eckigen Ringform ist hierbei beispielsweise als Kreis ausgebildet, kann jedoch ebenfalls polygonal sein.

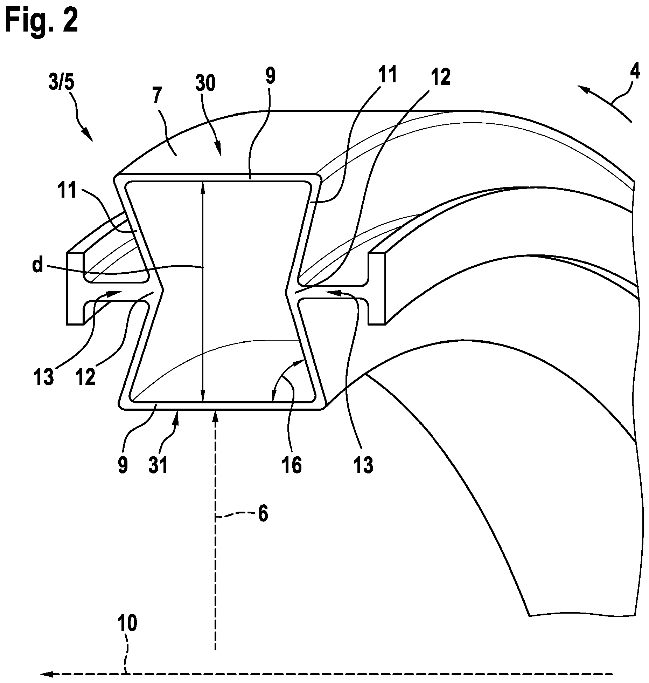

Nachfolgend wird die auxetische Struktur des Querschnittsabschnitts 3 anhand der Fig. 2 bis 4 erläutert.

Die Fig. 2 bis 4 zeigen jeweils eine Querschnittsansicht des Querschnittsabschnitts 3 des Hauptkörpers 2 des Elements 1 gemäß der ersten Ausführungsform der vorliegenden Erfindung.

Die Fig. 2 zeigt insbesondere einen Querschnittsabschnitt 3, welcher aus genau einer auxetischen Zelle 7 gebildet ist. Die auxetische Zelle 7 ermöglicht das auxetische Verhalten des Elements 1.

Dabei weist die auxetische Zelle 7 zwei Längsstege 9 auf, welche sich in einer Längserstreckungsrichtung 10 parallel zur Längsachse 8 (siehe Fig. 1a, 1b, 1c) erstrecken. Die auxetische Zelle 7 weist außerdem zwei Querstege 11 auf, welche sich zwischen den Längsstegen 9 erstrecken und jeweils eine Knickstelle 12 aufweisen. Mit den Knickstellen 12 sind Kraftstege 13 verbunden, welche sich ebenfalls in Längserstreckungsrichtung 10 erstrecken.

Die Knickstellen 12 der auxetischen Zelle 7 sind elastisch verformbar. Wird eine Kraft, insbesondere mittels der Kraftstege 13, auf die Knickstellen 12 angewandt, so verändert sich die Knickung der Knickstellen 12. Mit anderen Worten führt eine Druckkraft oder eine Zugkraft in Längserstreckungsrichtung 10 dazu, dass ein Winkel 16 zwischen den Längsstegen 9 und den Querstegen 11 kleiner oder größer wird. Ein Komprimieren der auxetischen Zelle 7 durch eine Druckkraft in Längserstreckungsrichtung 10 führt dazu, dass ein Abstand d zwischen den Längsstegen 9 abnimmt. Eine Zugkraft in Längserstreckungsrichtung 10 führt hingegen zu einer Zunahme des Abstands d zwischen den Längsstegen 9.

Somit reagiert das Element 1, beziehungsweise ein auxetischer Abschnitt 5 der Querschnittsabschnitte 3, auxetisch auf Kräfte entlang der Längserstreckungsrichtung 10 des Elementes 1. Dadurch, wie aus Fig. 2 ersichtlich, zeigt der auxetische Abschnitt 5 auxetisches Verhalten in Radialrichtung 6.

Wird das in den Fig. 1 und 2 dargestellte Element 1 beispielsweise als Dichtungsring eingesetzt, so kann eine Druckkraft auf diesen entlang der Längserstreckungsrichtung 10, also senkrecht zur Radialrichtung 6 (senkrecht zur Radialebene), ein radiales Aufweiten des Dichtungsrings bewirken. Hierbei wird ein Innenradius beziehungsweise ein Innenumfang des Dichtungsrings unter Druck größer. Herkömmliche Dichtungsringe, beispielsweise O-Ringe, werden unter Druckbeaufschlagung dicker. Das heißt, dass ein Innenradius herkömmlicher Dichtungsringe unter Druck geringer wird, während ein Außenradius dieser unter Druck größer wird. Damit kann das Element 1 Toleranzen, beispielweise als Dichtungsring oder Gehäuse, der Vorrichtung ausgleichen, insbesondere wenn die Vorrichtung mit Druckkräften beaufschlagt wird.

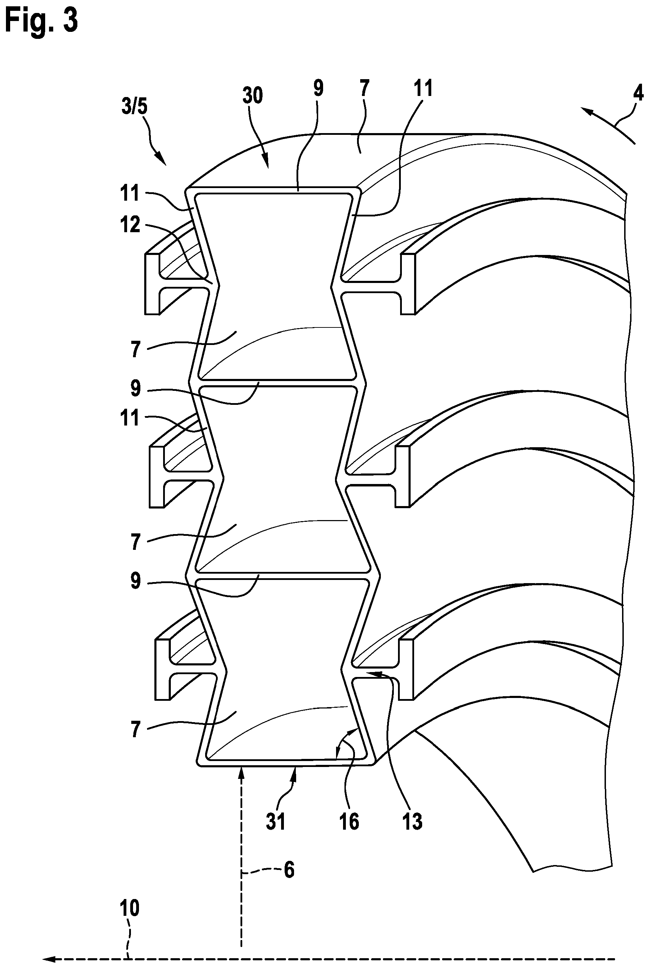

Fig. 3 zeigt eine Abwandlung des in Fig. 2 dargestellten auxetischen Abschnitts 5. Hierbei weist der auxetische Abschnitt 5 eine Mehrzahl von in Radialrichtung 6 aneinander angrenzenden auxetischen Zellen 7 auf. Dies hat den Vorteil, dass eine auf die Kraftstege 13 verteilte Druckkraft in Längserstreckungsrichtung 10, also senkrecht zur Radialrichtung 6, ein verstärktes auxetisches Verhalten in Radialrichtung 6 bewirkt.

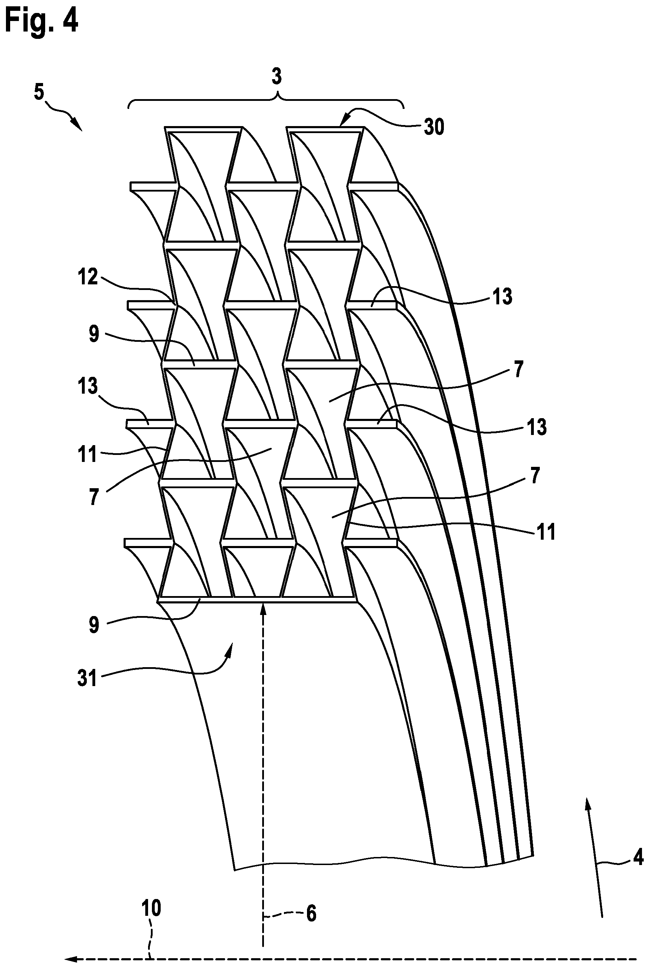

Fig. 4 zeigt eine weitere Abwandlung des in Fig. 2 oder in Fig. 3 dargestellten auxetischen Abschnitts 5. Hierbei weist der auxetische Abschnitt 5 eine Mehrzahl von in Radialrichtung 6 und Längserstreckungsrichtung 10 aneinander angrenzenden auxetischen Zellen 7 auf. Dadurch kann das auxetische Verhalten des Querschnittsabschnitts 3 in Radialrichtung 6 weiter verstärkt werden. Auch lassen sich dadurch, in Längserstreckungsrichtung 10, größere Querschnittsabschnitte 3 auxetisch gestalten.

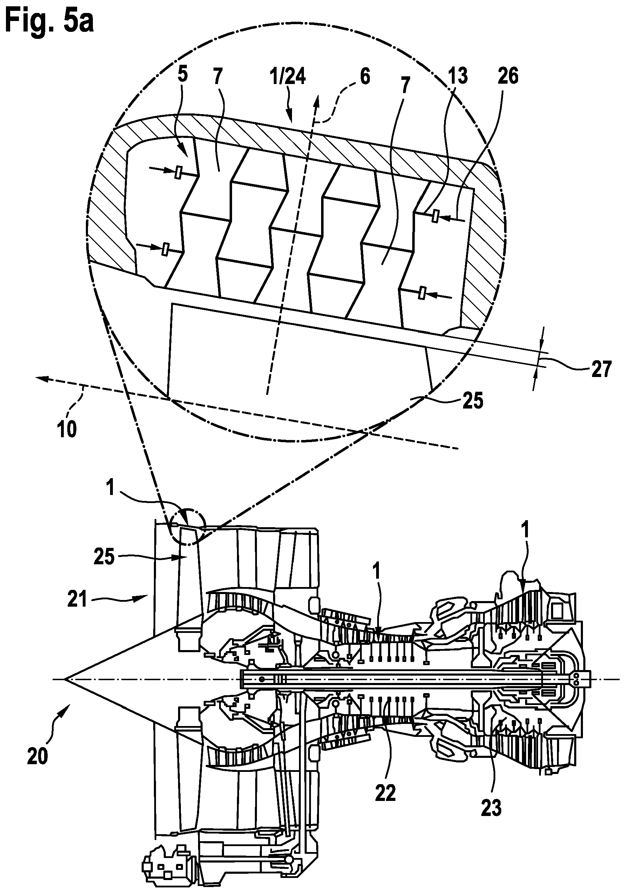

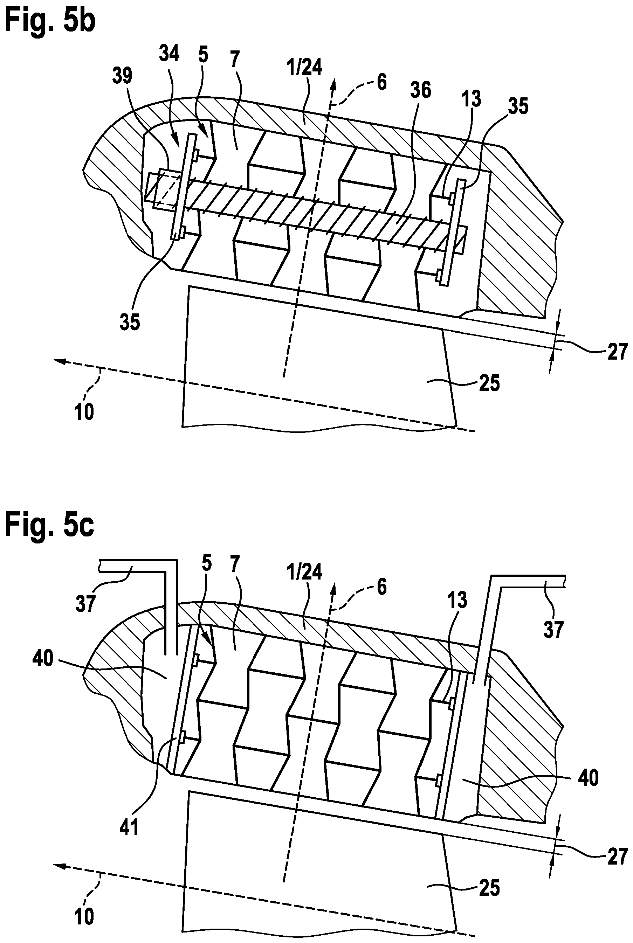

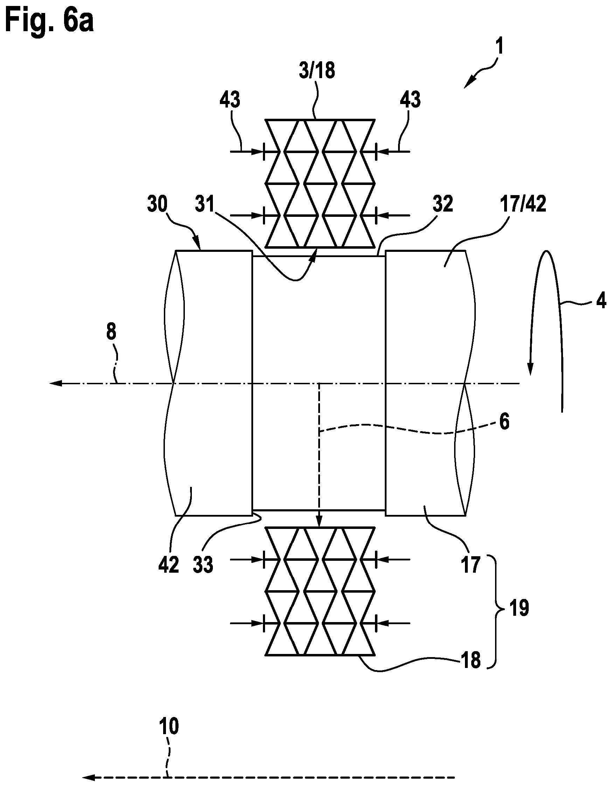

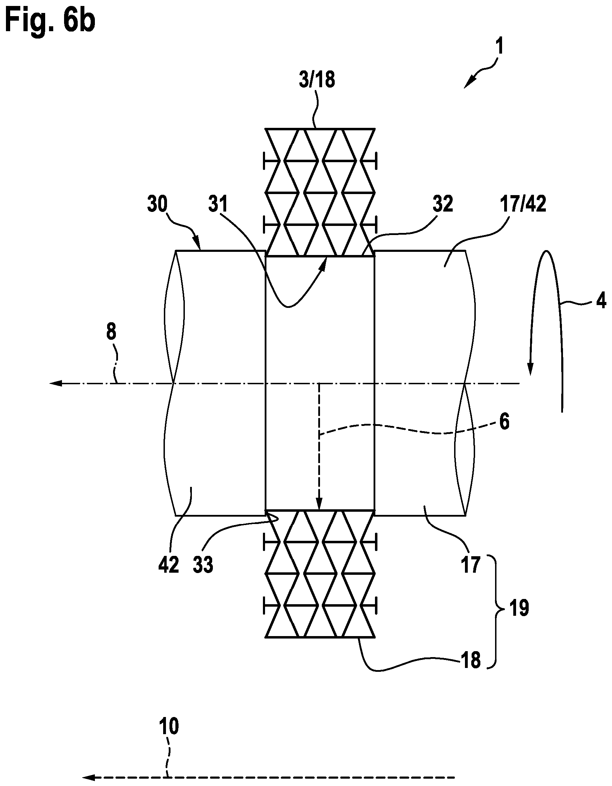

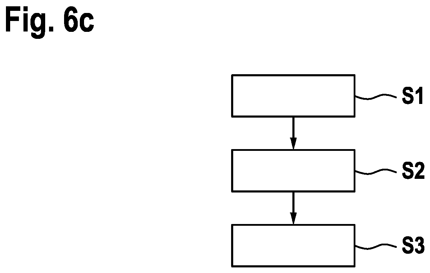

Nun werden anhand der Fig. 5 und der Fig. 6 verschiedene Anwendungsbeispiele, zusätzlich zur vorstehend erwähnten Ausgestaltung als Dichtungsring, für das Element 1 gemäß der ersten Ausführungsform der vorliegenden Erfindung diskutiert.

Dabei zeigt die Fig. 5a eine Skizze eines Triebwerkes 20 mit einem Element 1 gemäß der ersten Ausführungsform der vorliegenden Erfindung. Hierbei weist das Triebwerk 20 eine Fanstufe 21, einen Verdichter 22 und eine Turbine 23 auf.

Wie dem Detailansichtsfenster in der Fig. 5a zu entnehmen ist, ist hierbei ein Gehäuse 24 der Fanstufe 21 als vorstehend erläutertes Element 1 ausgebildet. Mit anderen Worten bildet der Hauptkörper 2 des Elements 1 das Gehäuse 24 der Fanstufe 21. Dabei weist das Gehäuse 24 einen auxetischen Abschnitt 5 auf (siehe hierzu auch Fig. 4).

Die Fanstufe 21 weist Schaufeln 25 auf. Das Gehäuse 24 ist hierbei als Element 1 ausgebildet, um eine möglichst enge Toleranz (Spaltmaß) zwischen den Schaufeln 25 und dem Gehäuse 24 der Fanstufe 21 zu ermöglichen. So kann beispielsweise ein Betrieb des Triebwerks 20 Druckkräfte 26 erzeugen, welche entlang der Längserstreckungsrichtung 10, insbesondere auf die Kraftstege 13 der auxetischen Zellen 7 wirken. Dadurch wird ein Innenumfang des Gehäuses 24 vergrößert, womit ein Spalt 27 zwischen den Schaufeln 25 und dem Gehäuse 24 vergrößert wird. Umgekehrt kann eine auf die auxetischen Zellen 7 wirkende Entlastung der Druckkraft oder wirkende Zugkraft einen Innenumfang des Gehäuses 24 verringern, womit der Spalt 27 verkleinert wird.

Des Weiteren ist hierbei anzumerken, dass das Triebwerk 20 das Element 1 zusätzlich oder alternativ dazu als Gehäuse 24 für den Verdichter 22 und/oder für die Turbine 23 aufweisen kann. Des Weiteren kann das Triebwerk 20 das Element 1 zusätzlich oder alternativ dazu als Dichtungsring wie vorstehend erläutert aufweisen.

Die Fig. 5b zeigt eine Abwandlung des als Element 1 ausgebildeten Gehäuses 24. Hierbei weist das Triebwerk 20 beziehungsweise das Gehäuse 24 eine Klemme 34 auf. Die Klemme 34 weist zwei Lochplatten 35 und eine Schraube 36 auf, welche in die Lochplatten 35 eingeführt ist. Eine der beiden Lochplatten 35 weist ein Gewinde auf, oder beide Lochplatten 35 weisen gegenläufige Gewinde auf.

Des Weiteren weist die Klemme 34 einen Aktuator 39 auf, welcher mit einer nicht dargestellten Steuereinheit verbunden ist. Der Aktuator 39 kann die Schraube 36 drehen, um einen Abstand zwischen den Lochplatten 35 zu variieren.

Durch das Drehen der Schraube 36 kann der auxetische Abschnitt 5 des Gehäuses 24 mit einem variablen Druck beaufschlagt werden, wodurch die Toleranz (Spaltmaß) mit den Schaufeln 25 variiert werden kann. Wird beispielsweise die Schraube 36 angezogen, so wird der auxetische Abschnitt 5 mit Druck beaufschlagt, sodass der Spalt 27 zwischen dem Gehäuse 24 und der Schaufel 25 zunimmt.

Das vorgenannte Spaltmaß kann beispielsweise während eines Flugs mit dem Triebwerk 20 variiert werden, um vorteilhaft Kenngrößen des Triebwerkes 20 zu variieren. Beispielsweise erzeugt ein kleinerer Spalt einen besseren Wirkungsgrad und eine größere Leistung.

Die Fig. 5c zeigt eine weitere Abwandlung des als Element 1 ausgebildeten Gehäuses 24. Hierbei weist das Triebwerk 20 beziehungsweise das Gehäuse 24 Hohlräume 40 auf. Dabei ist das Gehäuse 24, wie in Fig. 5c dargestellt, mittels Seitenwände 41 doppelwandig.

Die Hohlräume 40 sind jeweils mit Leitungen 37 verbunden. Die Leitungen 37 können untereinander verbunden sein. Die Leitungen 37 sind insbesondere mit Ventilen ausgestattet, wodurch der Druck durch diese reguliert werden kann.

Die Leitungen 37 sind hierbei mit den anderen Stufen, beispielsweise Verdichter 22 und/oder Turbine 23 verbunden und zapfen Druckluft von diesen ab. Hierfür weist das Triebwerk 20 Anzapfstellen (nicht dargestellt), welche beispielsweise auch zum Anzapfen von Druckluft aus diesen Stufen 21, 22, 23 verwendet werden, um ein Klimasystem eines Flugzeuges zu betreiben.

Die aus den anderen Stufen 22, 23 entnommene Druckluft wird durch die Leitungen 37 in die Hohlräume 40 geleitet, wodurch mittels der Seitenwände 41 der auxetische Abschnitt 5 des Gehäuses 24 mit Druck beaufschlagt wird.

Hierfür können die Seitenwände 41 beispielsweise beweglich verschiebbar in dem Gehäuse 24 angeordnet sein. Alternativ oder zusätzlich dazu können die Seitenwände 41 flexibel beziehungsweise elastisch ausgebildet sein.

Zum Ablassen eines Drucks in den Hohlräumen 40 können wiederrum die Leitungen 37 verwendet werden. Alternativ oder zusätzlich dazu kann das Gehäuse 24 zumindest ein Ablassventil (nicht dargestellt) und/oder zumindest ein Sicherheitsventil (nicht dargestellt) aufweisen.

Die Fig. 6a,6b zeigen jeweils eine Skizze einer Welle-Nabe-Verbindung 19 mit einem Element 1 gemäß der ersten Ausführungsform der vorliegenden Erfindung. Dabei ist das Element 1 als eine Nabe 18 der Welle-Nabe-Verbindung 19 ausgebildet. Die Fig. 6a zeigt dabei die Welle-Nabe-Verbindung 19 in einem Zustand vor einem Montageverfahren. Die Fig. 6b zeigt dabei die Welle-Nabe-Verbindung 19 nach dem Montageverfahren, also in einem montierten Zustand. Aufgrund der in den Fig. 6a und 6b dargestellten Querschnittsdarstellung der Nabe 18 ist lediglich ein Querschnitt dieser sichtbar. Die Nabe 18 kann in Umfangsrichtung 4 eckig oder rund ausgebildet sein, wie vorstehend mit Bezug auf die Fig. 1a bis 1c beschrieben.

Dabei weist die Welle-Nabe-Verbindung 19 grundsätzlich eine Welle 17 und die Nabe 18 auf. Die Nabe 18 ist als Element 1 gemäß den vorstehenden Erläuterungen, also als in Radialrichtung 6 zumindest abschnittsweise auxetisch ausgebildet. Die Welle 17 kann ebenfalls als Element 1 ausgebildet sein.

Hierbei (siehe auch Fig. 1a) weist die Nabe 18 zumindest einen Querschnittsabschnitt 3 auf, welcher einen auxetischen Abschnitt 5 aufweist. Dadurch kann zumindest ein Querschnittsabschnitt 3, bevorzugt die gesamte Nabe 18, auxetisches Verhalten in Radialrichtung 6 zeigen.

Die Welle 17 weist eine Nut 32 auf. Durch diese Nut 32 weist die Welle 17 Hinterschneidungen 33 auf. Wie einem Vergleich der Fig. 6a und 6b zu entnehmen ist, wird nun wie folgt das Element 1 beziehungsweise die Nabe 18 an der Welle 17 montiert, um die Welle-Nabe-Verbindung 19 zu bilden. Dies wird mit Bezug auf die Fig. 6c erläutert.

Dabei zeigt die Fig. 6c ein Blockschaltdiagramm eines Montageverfahrens für die Welle-Nabe-Verbindung 19 mit dem Element 1 (hier: die Nabe 18) gemäß der ersten Ausführungsform der vorliegenden Erfindung.

Hierbei wird das auxetische Verhalten der Nabe 18 wie folgt bei der Montage der Welle-Nabe-Verbindung 19 eingesetzt:
Zunächst, in einem ersten Schritt S1, wird eine Druckkraft in Längserstreckungsrichtung 10 der Nabe 18 auf die Nabe 18 angelegt (siehe auch Fig. 6a), wodurch der Innenumfang 31 der Nabe 18 zunimmt.

In einem zweiten Schritt S2 wird die Welle 17 in die Nabe 18 während der Druckbeaufschlagung eingeführt. Hierbei ist ein Außenumfang 30 der Welle 17 mittels der Nut 32 derart ausgestaltet, dass die Nabe 18 nur unter Druckbeaufschlagung der Nabe 18 in Längserstreckungsrichtung 10 an Abschnitten 42 der Welle 17 außerhalb der Nut 32 vorbei bewegt werden kann. Mit anderen Worten ist der Innenumfang 31 der Nabe 18 unter Druckbeaufschlagung größer als der Außenumfang 30 an den Abschnitten 42 der Welle 17.

In einem dritten Schritt S3 wird nun die Druckbeaufschlagung abgebrochen oder angehalten (siehe auch Fig. 6b). Nach der Druckbeaufschlagung wird der Innenumfang 31 der Nabe 18 wieder verringert, sodass eine besonders feste kraft- und formschlüssige Verbindung zwischen Nabe 18 und Welle 17 entsteht. Wie aus Fig. 6b ersichtlich, ist der Innenumfang 31 der Nabe 18 ohne Druckbeaufschlagung geringer als der Außenumfang 30 der Welle 17.

Durch dieses Montageverfahren, insbesondere durch die als Element 1 ausgebildete Nabe 18, kann eine Welle 17 für die Welle-Nabe-Verbindung 19 verwendet werden, welche Hinterschneidungen 33 aufweist.

Alternativ oder zusätzlich dazu kann die Welle 17 als Element 1 ausgebildet sein. Damit kann insbesondere der Außenumfang 30 der Welle 17 unter Druck- oder Zugkräften, insbesondere bei der Montage der Welle-Nabe-Verbindung 19 verändert werden.

Nach dem vorstehend erläuterten Montageverfahren kann der Innenumfang 31 der Nabe 18 variabel mittels Druckbeaufschlagung eingestellt werden, sodass insbesondere auch ein Schlupf zwischen der Nabe 18 und der Welle 17 eingestellt werden kann.

Die vorstehend erläuterte Welle-Nabe-Verbindung 19, die Nabe 18 und/oder die Welle 17 können in dem Triebwerk 20 enthalten sein und/oder mit dem Triebwerk 20 verbunden sein.

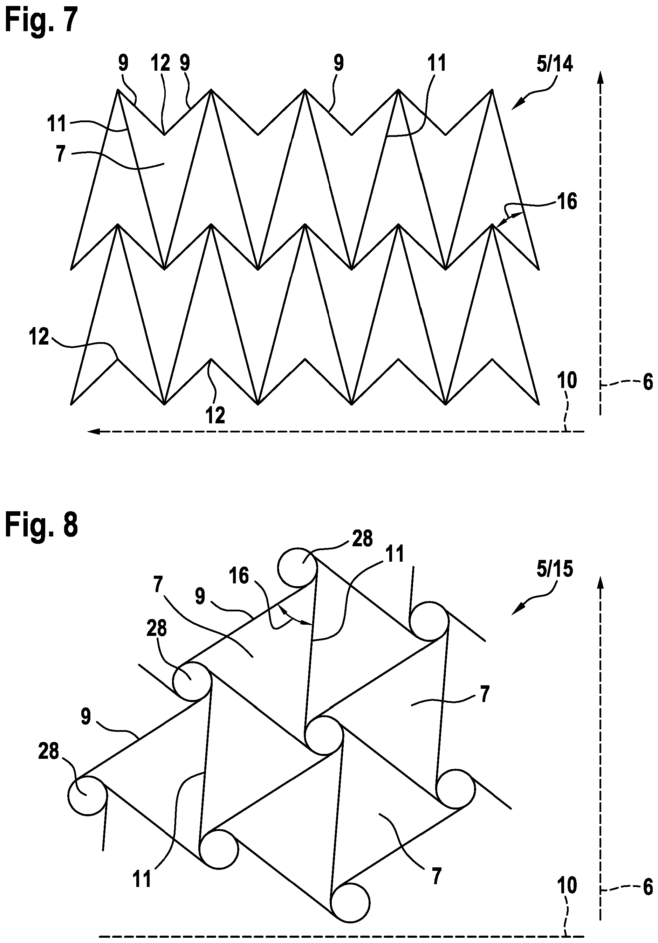

Nun werden weitere Ausführungsformen des auxetischen Abschnitts 5 anhand der Fig. 7 und der Fig. 8 erläutert.

Dabei zeigt Fig. 7 eine schematische Skizze eines beispielhaften auxetischen Abschnitts 5 eines Elements 1 gemäß einer zweiten Ausführungsform der vorliegenden Erfindung.

Die Fig. 7 zeigt einen auxetischen Abschnitt 5, welcher eine doppelte Pfeilspitzenform 14 aufweist. Dabei weist die doppelte Pfeilspitzenform 14 ebenfalls auxetische Zellen 7 auf, wobei die auxetischen Zellen 7 zwei Längsstege 9, welche sich in der Längserstreckungsrichtung 10 erstrecken, und zwei Querstege 11 auf, welche an einem Ende jeweils mit einem der Längsstege 9 verbunden und an einem anderen Ende miteinander verbunden sind. Die zwei Längsstege 9 sind außerdem mit einer der Knickstellen 12 verbunden, welche für ein elastisches auxetisches Verhalten in Radialrichtung 6 sorgt.

Wird nun eine Druckkraft in Längserstreckungsrichtung 10 auf die doppelte Pfeilspitzenform 14 angelegt, so wird der Winkel 16 zwischen den Querstegen 11 und den Längsstegen 9 geringer, sodass insgesamt ein elastisches auxetisches Verhalten in Radialrichtung 6 auftritt.

Fig. 8 zeigt eine schematische Skizze eines beispielhaften auxetischen Abschnitts 5 eines Elements 1 gemäß einer dritten Ausführungsform der vorliegenden Erfindung.

Die Fig. 8 zeigt einen auxetischen Abschnitt 5, welcher eine Chiralform 15 aufweist. Die Chiralform 15 ist durch Kreise 28 gekennzeichnet, welche die mehreren auxetischen Zellen 7 miteinander verbinden und ebenfalls elastisch ausgebildet sind. Die Kreise 28 verbinden Längsstege 9 und Querstege 11, wobei die Querstege 11 hierbei in Radialrichtung 6 verlaufen. Der Winkel 16 zwischen den Längsstegen 9 und den Querstegen 11 beträgt in etwa 45°.

Wird nun eine Druckkraft in Längserstreckungsrichtung 10 angelegt, so wickeln sich die Längsstege 9 und die Querstege 11 an den Kreisen 28 auf, sodass insgesamt eine Dicke des auxetischen Abschnitts 5 entlang der Radialrichtung 6 abnimmt. Mit anderen Worten zeigt die Chiralform 15 hier auxetisches Verhalten in Radialrichtung 6.

Die Chiralform 15 und die doppelte Pfeilspitzenform 14 können ebenfalls als Dichtung, als Welle 17, als Nabe 18 und/oder als Gehäuse 24, beispielweise in dem Triebwerk 20, eingesetzt werden.

Neben der vorstehenden schriftlichen Beschreibung der Erfindung wird zu deren ergänzender Offenbarung hiermit explizit auf die zeichnerische Darstellung der Erfindung in den Fig. 1a bis 8 Bezug genommen. Die Fig. 1a bis 8 dienen als explizite Offenbarung, wobei Details zu den vorstehenden Ausführungen aus den Fig. 1a bis 8 ersichtlich sind.

### Bezugszeichenliste

- 1: Element
- 2: Hauptkörper
- 3: Querschnittsabschnitt
- 4: Umfangsrichtung
- 5: auxetischer Abschnitt
- 6: Radialrichtung
- 7: auxetische Zellen
- 8: Längsachse
- 9: Längsstege
- 10: Längserstreckungsrichtung
- 11: Querstege
- 12: Knickstelle
- 13: Kraftsteg
- 14: Pfeilspitzenform
- 15: Chiralform
- 16: Winkel
- 17: Welle
- 18: Nabe
- 19: Welle-Nabe-Verbindung
- 20: Triebwerk
- 21: Fanstufe
- 22: Verdichter
- 23: Turbine
- 24: Gehäuse
- 25: Schaufel
- 26: Druckkräfte
- 27: Spalt
- 28: Kreis
- 30: Außenumfang
- 31: Innenumfang
- 32: Nut
- 33: Hinterschneidung
- 34: Klemme
- 35: Lochplatte
- 36: Schraube
- 37: Leitung
- 39: Aktuator
- 40: Hohlraum
- 41: Seitenwand
- 42: Abschnitt
- 43: Druckkraft
- d: Abstand
- S1: erster Schritt
- S2: zweiter Schritt
- S3: dritter Schritt

## Patentansprüche

1. Vorrichtung, aufweisend:
ein Element (1) zum Ausgleichen von Toleranzen und/oder Spaltweiten der Vorrichtung, das Element (1) weiter aufweisend:
einen Hauptkörper (2), welcher zumindest einen ringförmigen Querschnittsabschnitt (3) aufweist, wobei
der Querschnittsabschnitt (3) in seiner Umfangsrichtung (4) zumindest einen auxetischen Abschnitt (5) aufweist, welcher auxetisches Verhalten in Radialrichtung (6) des Hauptkörpers (2) zeigt, **dadurch gekennzeichnet, dass**
die Vorrichtung ausgebildet ist, das Element gezielt und aktiv mit Druck zu beaufschlagen.

2. Vorrichtung gemäß Anspruch 1, wobei der zumindest eine auxetische Abschnitt (5) in Radialrichtung (6) eine Mehrzahl von miteinander verbundenen, insbesondere aneinander angrenzenden, auxetischen Zellen (7) aufweist.

3. Vorrichtung gemäß einem der vorherigen Ansprüche, wobei der zumindest eine auxetische Abschnitt (5) in einem Schnitt entlang einer Längsachse (8) des Hauptkörpers (2) zwei Längsstege (9), welche sich in einer Längserstreckungsrichtung (10) parallel zur Längsachse (8) des Hauptkörpers (2) erstrecken, und zwei Querstege (11) aufweist, welche sich zwischen den Längsstegen (9) erstrecken und jeweils zumindest eine Knickstelle (12) aufweisen.

4. Vorrichtung gemäß Anspruch 3, wobei der zumindest eine auxetische Abschnitt (5) zumindest einen Kraftsteg (13) aufweist, wobei ein Ende des Kraftstegs (13) jeweils mit einer Knickstelle (12) verbunden ist und wobei sich der zumindest eine Kraftsteg (13) in Längserstreckungsrichtung (10) des Hauptkörpers (2) ausgehend von der Knickstelle (12) erstreckt.

5. Vorrichtung gemäß einem der vorherigen Ansprüche, wobei der zumindest eine auxetische Abschnitt (5) eine doppelte Pfeilspitzenform (14) oder eine Chiralform (15) aufweist.

6. Vorrichtung gemäß einem der vorherigen Ansprüche, wobei das Element (1) als Dichtung, insbesondere als berührungslose Dichtung, ausgebildet ist und wobei der Querschnittsabschnitt (3) des Hauptkörpers (2) vollständig kreisringförmig ist und sich der auxetische Abschnitt (5) des Hauptkörpers (2) über eine gesamte Längserstreckungsrichtung (10), insbesondere zusätzlich über die gesamte Umfangsrichtung (4), des Hauptkörpers (2) erstreckt.

7. Vorrichtung gemäß einem der Ansprüche 1 bis 5, wobei das Element (1) als ein Gehäuse (24) der Vorrichtung ausgebildet ist.

8. Vorrichtung gemäß einem der Ansprüche 1 bis 5, wobei das Element (1) als eine Welle (17) und/oder als eine Nabe (18) einer Welle-Nabe-Verbindung (19) ausgebildet ist.

9. Vorrichtung gemäß einem der Ansprüche 1 bis 8, wobei die Vorrichtung ein Triebwerk (20) ist.

10. Vorrichtung gemäß Anspruch 9, wobei eine Fanstufe (21) und/oder ein Verdichter (22) und/oder eine Turbine (23) des Triebwerks (20) das zumindest eine Element (1) aufweist, wobei das zumindest eine Element (1) als Dichtung nach Anspruch 6 oder als Gehäuse (24) der Fanstufe (21) und/oder des Verdichters (22) und/oder der Turbine (23) nach Anspruch 7 ausgebildet ist.

11. Montageverfahren für eine Welle-Nabe-Verbindung (19), wobei die Welle-Nabe-Verbindung (19) eine Welle (17) und eine Nabe (18) aufweist, wobei die Welle (17) und/oder die Nabe (18) als ein Element (1) zum Ausgleichen von Toleranzen und/oder Spaltweiten einer Vorrichtung gemäß Anspruch 1
ausgebildet ist, das Element (1) aufweisend einen Hauptkörper (2),
welcher zumindest einen ringförmigen Querschnittsabschnitt (3) aufweist, wobei der Querschnittsabschnitt (3) in seiner Umfangsrichtung (4) zumindest einen auxetischen Abschnitt (5) aufweist, welcher auxetisches Verhalten in Radialrichtung (6) des Hauptkörpers (2) zeigt und wobei das Montageverfahren die Schritte aufweist:
• einen ersten Schritt (S1), in welchem die als Element (1) ausgebildete Welle (17) und/oder die als Element (1) ausgebildete Nabe (18) entlang einer Längserstreckungsrichtung (10) des Hauptkörpers (2) mit Druck beaufschlagt wird;
• einen zweiten Schritt (S2), in welchem die Welle (17) in die Nabe (18) eingeführt wird;
• einen dritten Schritt (S3), in welchem die Druckbeaufschlagung der Welle (17) und/oder der Nabe (18) angehalten wird.

12. Anpassungsverfahren zur Anpassung einer Toleranz und/oder einer Spaltweite in einem Triebwerk (20), wobei das Triebwerk (20) zumindest ein Element (1) zum Ausgleichen von Toleranzen und/oder Spaltweiten des Triebwerks (20) aufweist, das Element (1) aufweisend einen Hauptkörper (2), welcher zumindest einen ringförmigen Querschnittsabschnitt (3) aufweist, wobei der Querschnittsabschnitt (3) in seiner Umfangsrichtung (4) zumindest einen auxetischen Abschnitt (5) aufweist, welcher auxetisches Verhalten in Radialrichtung (6) des Hauptkörpers (2) zeigt, wobei das zumindest eine Element (1) als Gehäuse (24) einer Fanstufe (21) und/oder eines Verdichters (22) und/oder einer Turbine (23) ausgebildet ist, aufweisend den Schritt:
• gezieltes und aktives Beaufschlagen des Gehäuses (24) mit einem Druck, sodass die Toleranz und/oder die Spaltweite zwischen einer Schaufel (25) der Fanstufe (21) und/oder des Verdichters (22) und/oder der Turbine (23) und dem Gehäuse (24) zunimmt oder abnimmt.

13. Anpassungsverfahren gemäß Anspruch 12, wobei das Gehäuse (24) pneumatisch mit Druck beaufschlagt wird, wobei ein in der Fanstufe (21) und/oder in dem Verdichter (22) und/oder in der Turbine (23) herrschender Druck auf das Gehäuse (24) umgeleitet wird.

14. Anpassungsverfahren gemäß Anspruch 12 oder 13, wobei das Gehäuse (24) mechanisch mit Druck beaufschlagt wird, wobei das Gehäuse (24) in einer Klemme (34) angeordnet ist und die Klemme (34) das Gehäuse (24) mit Druck beaufschlagt.

15. Anpassungsverfahren gemäß einem der Ansprüche 12 bis 14, wobei die gezielte und aktive Druckbeaufschlagung mittels einer Steuereinheit des Triebwerks (20) gesteuert wird.

## Claims

1. A device comprising:
an element (1) for compensating tolerances and/or gap widths of the device, the element (1) further comprising:
a main body (2) which has at least one annular cross-sectional section (3), wherein
the cross-sectional section (3) has in its circumferential direction (4) at least one auxetic section (5) which exhibits auxetic behavior in the radial direction (6) of the main body (2),
the device is designed to apply pressure to the element in a targeted and active manner.

2. The device according to claim 1, wherein the at least one auxetic section (5) has in the radial direction (6) a plurality of auxetic cells (7) which are connected to one another, in particular adjoin one another.

3. The device according to one of the preceding claims, wherein the at least one auxetic section (5) has, in a section along a longitudinal axis (8) of the main body (2), two longitudinal webs (9) which extend in a longitudinal extension direction (10) parallel to the longitudinal axis (8) of the main body (2), and two transverse webs (11) which extend between the longitudinal webs (9) and each have at least one bending point (12).

4. The device according to claim 3, wherein the at least one auxetic section (5) has at least one force web (13), wherein one end of the force web (13) is in each case connected to a bending point (12), and wherein the at least one force web (13) extends in the longitudinal extension direction (10) of the main body (2) starting from the bending point (12).

5. The device according to one of the preceding claims, wherein the at least one auxetic section (5) has a double arrowhead shape (14) or a chiral shape (15).

6. The device according to one of the preceding claims, wherein the element (1) is designed as a seal, in particular as a contactless seal, and wherein the cross-sectional section (3) of the main body (2) is completely annular and the auxetic section (5) of the main body (2) extends over an entire longitudinal extension direction (10), in particular additionally over the entire circumferential direction (4), of the main body (2).

7. The device according to one of claims 1 to 5, wherein the element (1) is designed as a housing (24) of the device.

8. The device according to one of claims 1 to 5, wherein the element (1) is designed as a shaft (17) and/or as a hub (18) of a shaft-hub connection (19).

9. The device according to one of claims 1 to 8, wherein the device is an engine (20).

10. The device according to claim 9, wherein a fan stage (21) and/or a compressor (22) and/or a turbine (23) of the engine (20) has the at least one element (1), wherein the at least one element (1) is designed as a seal according to claim 6 or as a housing (24) of the fan stage (21) and/or of the compressor (22) and/or of the turbine (23) according to claim 7.

11. An assembly method for a shaft-hub connection (19), wherein the shaft-hub connection (19) has a shaft (17) and a hub (18), wherein the shaft (17) and/or the hub (18) is designed as an element (1) for compensating tolerances and/or gap widths of a device according to claim 1, the element (1) comprising a main body (2) which has at least one annular cross-sectional section (3), wherein the cross-sectional section (3) has in its circumferential direction (4) at least one auxetic section (5) which exhibits auxetic behavior in the radial direction (6) of the main body (2), and wherein the assembly method comprises the steps:
• a first step (S1), in which the shaft (17) designed as an element (1) and/or the hub (18) designed as an element (1) is/are applied with pressure along a longitudinal extension direction (10) of the main body (2);
• a second step (S2), in which the shaft (17) is inserted into the hub (18);
• a third step (S3), in which the application of pressure to the shaft (17) and/or the hub (18) is stopped.

12. An adaptation method for adapting a tolerance and/or a gap width in an engine (20), wherein the engine (20) has at least one element (1) for compensating tolerances and/or gap widths of the engine (20), the element (1) comprising a main body (2) which has at least one annular cross-sectional section (3), wherein the cross-sectional section (3) has in its circumferential direction (4) at least one auxetic section (5) which exhibits auxetic behavior in the radial direction (6) of the main body (2), wherein the at least one element (1) is designed as a housing (24) of a fan stage (21) and/or of a compressor (22) and/or of a turbine (23), comprising the step:
• targeted and active application of pressure to the housing (24), so that the tolerance and/or the gap width between a blade (25) of the fan stage (21) and/or of the compressor (22) and/or of the turbine (23) and the housing (24) increases or decreases.

13. The adaptation method according to claim 12, wherein the housing (24) is pneumatically applied with pressure, wherein a pressure prevailing in the fan stage (21) and/or in the compressor (22) and/or in the turbine (23) is diverted to the housing (24).

14. The adaptation method according to claim 12 or 13, wherein the housing (24) is mechanically applied with pressure, wherein the housing (24) is arranged in a clamp (34) and the clamp (34) applies pressure to the housing (24).

15. The adaptation method according to one of claims 12 to 14, wherein the targeted and active application of pressure is controlled by means of a control unit of the engine (20).

## Revendications

1. Dispositif comprenant :
un élément (1) pour compenser des tolérances et/ou des largeurs d'interstice du dispositif, l'élément (1) comprenant en outre :
un corps principal (2) qui présente au moins une section de section transversale annulaire (3),
la section de section transversale (3) présentant dans sa direction périphérique (4) au moins une section auxétique (5) qui présente un comportement auxétique dans la direction radiale (6) du corps principal (2), **caractérisé en ce que**
le dispositif est conçu pour soumettre l'élément à une pression de manière ciblée et active.

2. Dispositif selon la revendication 1, dans lequel l'au moins une section auxétique (5) présente dans la direction radiale (6) une pluralité de cellules auxétiques (7) reliées les unes aux autres, en particulier adjacentes les unes aux autres.

3. Dispositif selon l'une quelconque des revendications précédentes, dans lequel l'au moins une section auxétique (5) présente, dans une coupe le long d'un axe longitudinal (8) du corps principal (2), deux nervures longitudinales (9) qui s'étendent dans une direction d'étendue longitudinale (10) parallèlement à l'axe longitudinal (8) du corps principal (2), et deux nervures transversales (11) qui s'étendent entre les nervures longitudinales (9) et présentent à chaque fois au moins un point de pliage (12).

4. Dispositif selon la revendication 3, dans lequel l'au moins une section auxétique (5) présente au moins une nervure de force (13), une extrémité de la nervure de force (13) étant à chaque fois reliée à un point de pliage (12) et l'au moins une nervure de force (13) s'étendant dans la direction d'étendue longitudinale (10) du corps principal (2) à partir du point de pliage (12).

5. Dispositif selon l'une quelconque des revendications précédentes, dans lequel l'au moins une section auxétique (5) présente une forme à double pointe de flèche (14) ou une forme chirale (15).

6. Dispositif selon l'une quelconque des revendications précédentes, dans lequel l'élément (1) est réalisé sous forme de joint d'étanchéité, en particulier sous forme de joint d'étanchéité sans contact, et la section de section transversale (3) du corps principal (2) étant entièrement de forme annulaire circulaire et la section auxétique (5) du corps principal (2) s'étendant sur toute une direction d'étendue longitudinale (10), en particulier en outre sur toute la direction périphérique (4), du corps principal (2).

7. Dispositif selon l'une quelconque des revendications 1 à 5, dans lequel l'élément (1) est réalisé sous forme de boîtier (24) du dispositif.

8. Dispositif selon l'une quelconque des revendications 1 à 5, dans lequel l'élément (1) est réalisé sous forme d'arbre (17) et/ou sous forme de moyeu (18) d'une liaison arbre-moyeu (19).

9. Dispositif selon l'une quelconque des revendications 1 à 8, dans lequel le dispositif est un moteur (20).

10. Dispositif selon la revendication 9, dans lequel un étage de soufflante (21) et/ou un compresseur (22) et/ou une turbine (23) du moteur (20) présente l'au moins un élément (1), l'au moins un élément (1) étant réalisé sous forme de joint d'étanchéité selon la revendication 6 ou sous forme de boîtier (24) de l'étage de soufflante (21) et/ou du compresseur (22) et/ou de la turbine (23) selon la revendication 7.

11. Procédé de montage pour une liaison arbre-moyeu (19), la liaison arbre-moyeu (19) présentant un arbre (17) et un moyeu (18), l'arbre (17) et/ou le moyeu (18) étant réalisés sous forme d'élément (1) pour compenser des tolérances et/ou des largeurs d'interstice d'un dispositif selon la revendication 1, l'élément (1) présentant un corps principal (2) qui présente au moins une section de section transversale annulaire (3), la section de section transversale (3) présentant dans sa direction périphérique (4) au moins une section auxétique (5) qui présente un comportement auxétique dans la direction radiale (6) du corps principal (2) et le procédé de montage présentant les étapes suivantes :
• une première étape (S1) dans laquelle l'arbre (17) réalisé sous forme d'élément (1) et/ou le moyeu (18) réalisé sous forme d'élément (1) est soumis à une pression le long d'une direction d'étendue longitudinale (10) du corps principal (2) ;
• une deuxième étape (S2) dans laquelle l'arbre (17) est introduit dans le moyeu (18) ;
• une troisième étape (S3) dans laquelle la sollicitation en pression de l'arbre (17) et/ou du moyeu (18) est arrêtée.

12. Procédé d'adaptation pour adapter une tolérance et/ou une largeur d'interstice dans un moteur (20), le moteur (20) présentant au moins un élément (1) pour compenser des tolérances et/ou des largeurs d'interstice du moteur (20), l'élément (1) présentant un corps principal (2) qui présente au moins une section de section transversale annulaire (3), la section de section transversale (3) présentant dans sa direction périphérique (4) au moins une section auxétique (5) qui présente un comportement auxétique dans la direction radiale (6) du corps principal (2), l'au moins un élément (1) étant réalisé sous forme de boîtier (24) d'un étage de soufflante (21) et/ou d'un compresseur (22) et/ou d'une turbine (23), présentant l'étape suivante :
• la sollicitation ciblée et active du boîtier (24) avec une pression de sorte que la tolérance et/ou la largeur d'interstice entre une aube (25) de l'étage de soufflante (21) et/ou du compresseur (22) et/ou de la turbine (23) et le boîtier (24) augmente ou diminue.

13. Procédé d'adaptation selon la revendication 12, dans lequel le boîtier (24) est soumis à une pression pneumatiquement, une pression régnant dans l'étage de soufflante (21) et/ou dans le compresseur (22) et/ou dans la turbine (23) étant déviée sur le boîtier (24).

14. Procédé d'adaptation selon la revendication 12 ou 13, dans lequel le boîtier (24) est soumis à une pression mécaniquement, le boîtier (24) étant disposé dans une pince (34) et la pince (34) sollicitant le boîtier (24) avec une pression.

15. Procédé d'adaptation selon l'une quelconque des revendications 12 à 14, dans lequel la sollicitation ciblée et active avec une pression est commandée au moyen d'une unité de commande du moteur (20).
